# EUROPÄISCHE PATENTSCHRIFT

(11) **EP 3 649 439 B1**
(45) Veröffentlichungstag und Bekanntmachung des Hinweises auf die Patenterteilung: **28.07.2021**
(21) Anmeldenummer: 18732752.3
(22) Anmeldetag: 19.06.2018
(51) Int. Cl.: G01F 1/58, G01F 15/18

(54) **MAGNETISCH-INDUKTIVES DURCHFLUSSMESSGERÄT**
MAGNETICALLY INDUCTIVE FLOW METER
DÉBITMÈTRE MAGNÉTO-INDUCTIF

(30) Priorität: 06.07.2017 DE 102017115155
(43) Veröffentlichungstag der Anmeldung: 13.05.2020
(73) Patentinhaber: Endress+Hauser Flowtec AG, 4153 Reinach (CH)
(72) Erfinder: TSCHUDIN, Beat, 4153 Reinach (CH)
(74) Vertreter: Andres, Angelika Maria
(86) Internationale Anmeldenummer: PCT/EP2018/066258
(87) Internationale Veröffentlichungsnummer: WO 2019/007672

(56) Entgegenhaltungen:
- DE-A1-102014 106 567
- JP-A- H08 261 807
- US-A1- 2014 251 025

## Beschreibung

Die Erfindung betrifft ein magnetisch-induktives Durchflussmessgerät zur Messung einer Strömungsgeschwindigkeit bzw. eines Volumendurchflusses eines durch ein Messrohr fließenden Mediums.

Typische magnetisch-induktive Durchflussmessgeräte weisen ein Messrohr zum Führen eines Mediums, ein Magnetsystem zum Erzeugen eines Magnetfelds, welches senkrecht zum Messrohr steht, und ein Paar Messelektroden zum Erfassen einer im Medium durch das Magnetfeld induzierten, durchflussabhängigen elektrischen Spannung auf. Um das Magnetfeld außerhalb des Messrohrs zu führen um unkontrollierte Streueffekte zu vermeiden, wird häufig eine metallische Felddrückführung eingesetzt, welche die Feldlinien in einen definierten Raumbereich konzentriert. Diese sind häufig in Form von zwei Metallblechen ausgestaltet, welche bei Fertigung mechanisch kontaktiert werden, wie beispielsweise in den Schriften DE102014106567A1 und JP H08 261807 A gezeigt.

Für einen stabilen Betrieb eines Durchflussmessgeräts ist es besonders wichtig, dass diese mechanische Kontaktierung stabil ist, damit die Feldleiteigenschaften konstant sind. Eine Änderung dieser Feldleiteigenschaften führte zu einem geänderten Magnetfeld im Messrohr und somit zu veränderten Spannungswerten, was zu einer instabilen Durchflussmessung führen würde. Die Schrift DE102014106567A1 gibt keine Hinweise, wie diese mechanische Kontaktierung stabil ausgestaltet werden kann.

Aufgabe der Erfindung ist es daher, ein magnetisch-induktives Durchflussmessgerät mit stabilen magnetischen Eigenschaften vorzuschlagen, welches eine möglichst einfach und insbesondere ohne technische Hilfsmittel wie z. B Kleben oder Schweißen oder Schrauben montierbare Feldrückführung aufweist.

Ein erfindungsgemäßes magnetisch-induktives Durchflussmessgerät zur Messung einer Strömungsgeschwindigkeit bzw. eines Volumendurchflusses eines durch ein Messrohr fließenden Mediums umfasst:
Ein Messrohr mit einem Führungskanal zum Führen eines Mediums, wobei das Messrohr eine Messrohrachse aufweist;
ein Magnetsystem mit einem ersten Spulensystem mit einer ersten Spule und mit einem ersten Spulenkern, und mit einem zweiten Spulenkern, wobei die Spulenkerne auf gegenüberliegenden Messrohrseiten angeordnet sind,
und wobei das Magnetsystem dazu eingerichtet ist, ein senkrecht zur Messrohrachse stehendes Magnetfeld zu erzeugen, wobei das Magnetsystem mindestens eine Spulenhalterung aufweist, mittels welcher Spulenhalterung mindestens ein Spulensystem gehalten ist;
ein Paar Messelektroden zum Erfassen einer durch das Magnetfeld induzierten durchflussabhängigen elektrischen Spannung im Medium;
eine elektronische Mess-/Betriebsschaltung zum Betreiben des Magnetsystems sowie der Elektroden und zum Bereitstellen einer den Durchfluss repräsentierenden Messgröße;
wobei das magnetisch-induktive Durchflussmessgerät eine Feldrückführung aufweist, welche dazu eingerichtet ist, das Magnetfeld außerhalb des Messrohrs zwischen den Spulensystemen zu leiten;
wobei der Spulenkern dazu eingerichtet ist, das Magnetfeld zwischen dem Messrohr und der Feldrückführung zu leiten, wobei der Spulenkern auf einer dem Messrohr abgewandten Seite einen äußeren Polschuh aufweist, auf welchem äußeren Polschuh die Feldrückführung aufliegt,
wobei die Feldrückführung das Messrohr umgreift,
wobei die Feldrückführung umfasst:
   ein erstes Gleichteil und ein zweites Gleichteil mit jeweils einem ersten planaren Ende, einem zweiten planaren Ende und einem Mittenbereich;
   wobei die Gleichteile jeweils aus einem Metallblech hergestellt sind,
   wobei die ersten Enden von den jeweiligen Mittenbereichen durch jeweils einen ersten Biegungsabschnitt abgegrenzt sind, und wobei die zweiten Enden von den jeweiligen Mittenbereichen durch jeweils einen zweiten Biegungsabschnitt abgegrenzt sind,
   wobei das erste Ende und das zweite Ende eines jeweiligen Gleichteils parallel zueinander verlaufen,
   wobei das erste Gleichteil und das zweite Gleichteil dazu eingerichtet sind, über ihre Enden zusammengeführt zu werden, wobei die Feldrückführung zwei Überlappbereiche aufweist, in welchem sich Enden der Gleichteile überlappen,
   wobei die ersten Enden und die zweiten Enden jeweils mindestens eine Eingriffsöffnung und mindestens ein Eingriffsmittel aufweisen,
   wobei das Eingriffsmittel eines jeden Endes dazu eingerichtet ist, bei Zusammenführung der Gleichteile in eine Eingriffsöffnung eines Endes des jeweils anderen Gleichteils einzugreifen.

Die Gleichteile sind dabei vorzugsweise aus Elektroblech hergestellt.

Die Gleichteile sind dabei beispielsweise durch Blechstanzen, Laserschneiden oder Wasserstrahlschneiden und anschließendes Blechbiegen gefertigt.

In einer Ausgestaltung weist das magnetisch-induktive Durchflussmessgerät eine zweite Spule auf, welche mit dem zweiten Spulenkern ein zweites Spulensystem ausbildet.

In einer Ausgestaltung ist das Eingriffsmittel eine Lasche, welche in die Eingriffsöffnung einrastet, wobei die Lasche aus dem Gleichteil geformt ist,
wobei der Formprozess einer aus folgender Liste ist: Stanzen, Schneiden, Laserschneiden, Sägen, Ätzen.

Die Lasche steht dabei aus dem jeweiligen Ende heraus, was beispielsweise durch Biegen bewerkstelligt ist. Die Gleichteileigenschaften beziehen sich hierbei auf die Stanzteile. Die Orientierung der Laschen nach Herausbiegen aus dem jeweiligen Ende ist nicht zu den Gleichteileigenschaften hinzuzuzählen.

In einer Ausgestaltung weist der Mittenbereich eine Aufnahmeöffnung auf, welche Aufnahmeöffnung dazu eingerichtet ist, eine Messelektrode oder eine Messelektrodenkontaktierung eines magnetisch-induktiven Durchflussmessgeräts aufzunehmen.

In einer Ausgestaltung ist der Mittenbereich planar.

In einer Ausgestaltung weist die Feldrückführung eine Querschnittsfläche auf, bezüglich welcher Querschnittsfläche die Gleichteile symmetrisch sind, wobei die Gleichteile sowie die Feldrückführung senkrecht zur Querschnittsfläche eine Breite aufweisen,
wobei die Enden einen ersten Bereich und einen zweiten Bereich aufweisen, wobei der erste Bereich an den ersten Biegungsabschnitt bzw. an den zweiten Biegungsabschnitt anschließt, und wobei der zweite Bereich an den ersten Bereich anschließt,
wobei der erste Bereich eine erste Breite aufweist, und wobei der zweite Bereich eine zweite Breite aufweist, wobei die erste Breite größer ist als die zweite Breite,
und wobei die Überlappbereiche der Feldrückführung jeweils zwei Außenbereiche und jeweils einen Zentralbereich aufweisen, wobei die Außenbereiche jeweils einem Mittenbereich zugewandt sind, und wobei der Zentralbereich zwischen den jeweiligen Außenbereichen angeordnet ist,
wobei die Außenbereiche eine dritte Breite und die Zentralbereiche eine vierte Breite aufweisen, wobei die dritte Breite gleich der ersten Breite ist, und wobei die vierte Breite gleich der zweiten Breite ist,
wobei ein Übergang von einem Außenbereich zu einem Zentralbereich ein Anschlag ist.

Ein Biegeabschnitt kann eine Biegung aufweisen, welche Biegung beispielsweise zumindest abschnittsweise einem Kreisumfang folgt. Ein Biegeabschnitt kann auch zwei oder mehrere Biegungen aufweisen, welche durch jeweils einen geraden Abschnitt verbunden sind.

In einer Ausgestaltung weist die Spulenhalterung auf mindestens einer dem Messrohr abgewandten Seite mindestens eine Pressvorrichtungen auf, welche dazu eingerichtet sind, die Feldrückführung gegen den äußeren Polschuh eines Spulenkerns zu pressen.

In einer Ausgestaltung weist die Pressvorrichtung mindestens einen Vorsprung parallel zu einer Spulenkernachse auf, welcher Vorsprung aus einem Spulenhalterungsgrundkörper neben der Feldrückführung hervorsteht und die Feldrückführung überragt,
und wobei die Pressvorrichtung mindestens einen Ausleger aufweist, welcher Ausleger mit mindestens einem Vorsprung verbunden ist und einen Randbereich der Feldrückführung zumindest teilweise überkragt,
wobei ein überkragender Bereich des Auslegers auf einer der Feldrückführung zugewandten Seite mindestens eine Quetschrippe aufweist, welche dazu eingerichtet ist, die Feldrückführung gegen den Polschuh zu pressen.

In einer Ausgestaltung ist die Quetschrippe dazu eingerichtet, sich bei Pressung der Feldrückrührung zu verformen.

In einer Ausgestaltung verläuft die Quetschrippe parallel zur Feldrückrührung, wobei die Quetschrippe in ihrem Querschnitt eine Dreiecksform aufweist, wobei eine zur Feldrückführung zeigende Ecke des Querschnitts einen Winkel kleiner als 90° und insbesondere kleiner als 80° bevorzugt kleiner als 70° aufweist.

Kleinere Winkel sorgen für eine leichtere Verformbarkeit der Quetschrippe.

In einer Ausgestaltung verläuft die Quetschrippe parallel zur Feldrückrührung, wobei die Quetschrippe in ihrem Querschnitt einem Kreisausschnitt entspricht, wobei eine dem Umfang entsprechende Seite eines zum Kreisausschnitt gehörenden Kreises zur Feldrückführung gerichtet ist.

In einer Ausgestaltung ist der mindestens eine Vorsprung dazu eingerichtet, bei Pressung eine durch den mindestens einen Ausleger bzw. den mindestens einen Vorsprung definierte Anpresskraft über den mindestens einen Ausleger aufzunehmen und sich zu verformen.

In einer Ausgestaltung greift die Pressvorrichtung in einen Zentralbereich der Feldrückführung ein, wodurch die Feldrückführung mittels der Anschläge positioniert ist.

In einer Ausgestaltung ist die Spulenhalterung mittels eines Spritzgussverfahrens hergestellt. Insbesondere ist die Spulenhalterung mittels eines Thermoplast- oder Duroplastspritzgussverfahrens hergestellt.

Im Folgenden wird die Erfindung anhand von Ausführungsbeispielen dargestellt.
Fig. 1 a) und 1 b) skizzieren beispielhafte schematische Gleichteile einer Feldrückführung eines erfindungsgemäßen Durchflussmessgeräts und deren Zusammensetzung zu einer Feldrückführung, und Fig. 1 b) skizziert verschiedene Ausgestaltungen von Biegungsabschnitten eines Gleichteils; und
Fig. 2 skizziert einen schematischen Querschnitt durch ein beispielhaftes erfindungsgemäßes Durchflussmessgerät; und
Fig. 3 a) skizziert einen schematischen Längsschnitt durch ein beispielhaftes erfindungsgemäßes Durchflussmessgerät und Fig. 3 b) skizziert eine Ausschnittvergrößerung von Fig. 3 a); und
Figs. 4 a) bis c) skizzieren schematische Ansichten einer Pressvorrichtung; und
Fig. 5 skizziert schematisch die Funktionsweise eines typischen magnetisch-induktiven Durchflussmessgeräts.

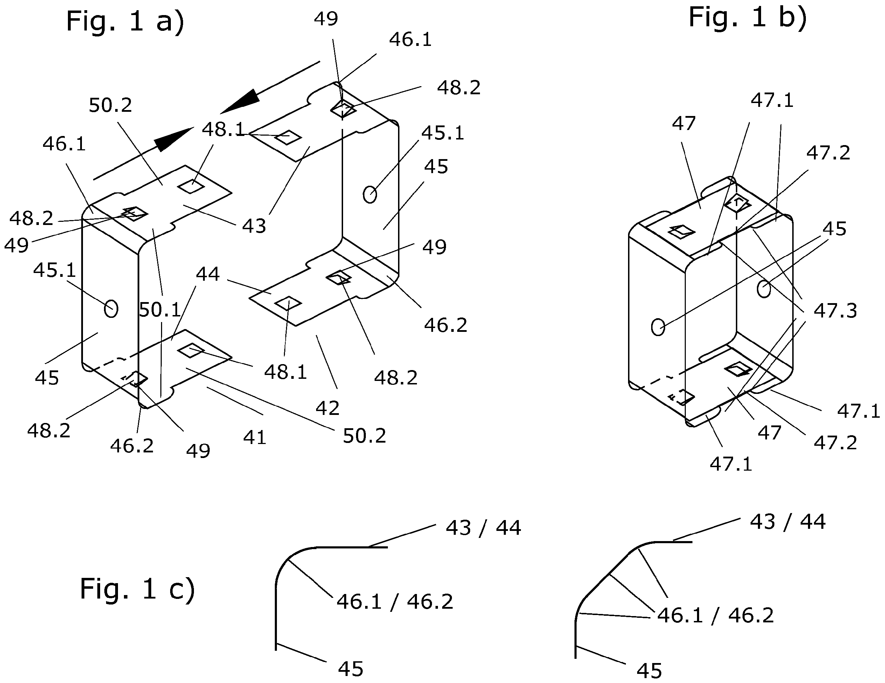

Fig. 1 a) skizziert ein Paar Gleichteile einer Feldrückführung 40 eines erfindungsgemäßen magnetisch-induktiven Durchflussmessgeräts 1 mit einem ersten Gleichteil 41 und einem zweiten Gleichteil 42, und Fig. 1 b) zeigt eine Feldrückführung 40, welche durch Zusammensetzen der beiden Gleichteile hergestellt wird. Jedes Gleichteil 41, 42 weist ein erstes planares Ende 43 sowie ein zweites planares Ende 44 und einen Mittenbereich 45 auf, welcher Mittenbereich wie hier gezeigt beispielsweise planar ist. Das erste planare Ende eines Gleichteils ist mit dem Mittenbereich über einen ersten Biegungsabschnitt 46.1 verbunden, und das zweite planare Ende eines Gleichteils ist über einen zweiten Biegungsabschnitt 46.2 mit dem Mittenbereich 45 verbunden, wobei das erste planare Ende 43 und das zweite planare Ende 44 parallel zueinander ausgerichtet sind und bezüglich des entsprechenden Mittenbereichs auf eine gleiche Seite ausgerichtet sind. Die beiden planaren Enden 43, 44 eines Gleichteils weisen jeweils eine Eingriffsöffnung 48.1 sowie ein Eingriffsmittel 48.2 auf, welches wie hier dargestellt beispielsweise eine Lasche 49 sein kann, welche aus einem entsprechenden Ende herausgebogen ist. Die Orientierung der Lasche nach Herausbiegen aus ihrem jeweiligen Ende ist beim Begriff Gleichteil nicht zu berücksichtigen. Die Lasche kann wie hier gezeigt beispielsweise eben ausgebildet sein. Alternativ kann die Lasche auch ein gebogenes Profil aufweisen. Bei Zusammenführen der Gleichteile greift zumindest ein Eingriffsmittel 48.2 des einen Gleichteils 41 in eine Eingriffsöffnung 48.1 des jeweils anderen Gleichteils, wobei sich zwei Überlappbereiche 47 ausbilden. Der Mittenbereich 45 eines jeden Gleichteils weist eine Aufnahmeöffnung 45.1 für eine Messelektrode bzw. eine Messelektrodenkontaktierung auf. Die Gleichteile sind auf besonders einfache und kostengünstige Art und Weise durch Blechstanzen und anschließendem Blechbiegen gefertigt, wobei der Begriff auf Gleichteil auf das dabei entstehende Stanzteil anzuwenden ist. Das erste planare Ende 43 sowie das zweite planare Ende 44 eines Gleichteils 41, 42 weisen jeweils einen an den ersten Biegungsabschnitt 46.1 bzw. zweiten Biegungsabschnitt 46.2 anschließenden ersten Bereich 50.1 mit einer ersten Breite und jeweils einen an den ersten Bereich 50.1 anschließenden zweiten Bereich 50.2 mit einer zweiten Breite auf, wobei die erste Breite größer ist als die zweite Breite. Dies hat zur Folge, dass ein Überlappbereich 47 in jeweils zwei Außenbereiche 47.1 mit der ersten Breite und jeweils einen Zentralbereich mit der zweiten Breite aufgeteilt ist, wobei Übergänge von Außenbereichen zu den jeweiligen Zentralbereichen jeweils einen Anschlag 47.3 darstellen.

Fig. 1 c) skizziert den Verlauf zweier Ausgestaltungen eines ersten Biegeabschnitts 46.1 bzw. zweiten Biegeabschnitts 46.2, welcher den Mittenbereich 45 mit dem ersten planaren Ende 43 bzw. zweiten planaren Ende 44 verbindet. Beispielsweise können die planaren Enden durch einen Biegeabschnitt verbunden sein, welcher eine Biegung aufweist, welche Biegung beispielsweise zumindest abschnittsweise einem Kreisumfang folgt. Ein Biegeabschnitt kann auch zwei oder mehrere Biegungen aufweisen, welche durch jeweils einen geraden Abschnitt verbunden sind.

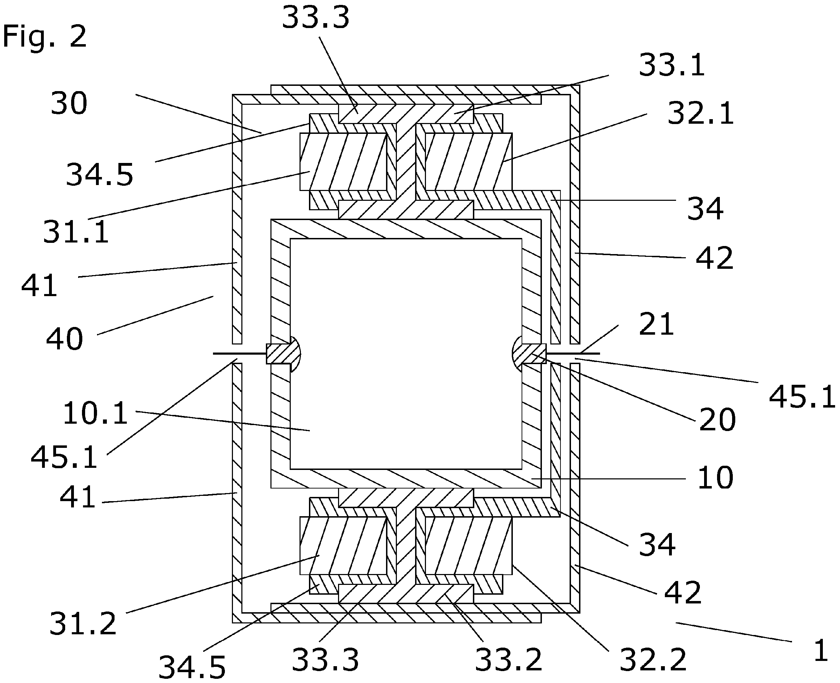

Fig. 2 zeigt einen schematischen Querschnitt durch ein erfindungsgemäßes magnetisch-induktives Durchflussmessgerät 1 mit einem Messrohr 10, in welches Messrohr zwei Messelektroden 20 eingelassen sind. Ein Führungskanal 10.1 des Messrohrs zum Führen eines Mediums kann wie hier gezeigt, in einem die Messelektroden 20 beinhaltenden Querschnitt des Messrohrs eine rechteckige Form aufweisen. Alternativ sind auch runde oder ovale Ausgestaltungen möglich. Das magnetisch-induktive Durchflussmessgerät weist des Weiteren ein Magnetsystem 30 mit einem ersten Spulensystem 31.1 und mit einem zweiten Spulensystem 31.2 auf, wobei das erste Spulensystem eine erste Spule 32.1 mit einem ersten Spulenkern 33.1 aufweist, und wobei das zweite Spulensystem eine zweite Spule 32.2 mit einem zweiten Spulenkern 33.2 aufweist, wobei die Spulenkerne jeweils einem dem Messrohr abgewandten äußeren Polschuh 33.3 aufweisen. Die Spulenkerne können beispielsweise wie in diesem Ausführungsbeispiel gezeigt in eine Spulenhalterung 34 des magnetisch-induktiven Durchflussmessgeräts integriert sein, welche Spulenhalterung beispielsweise mittels eines Spritzgussverfahrens hergestellt ist und idealerweise einstückig ausgebildet ist. Die Spulenkerne sind auf einer dem Messrohr 10 zugewandten Seite idealerweise an eine Außenkontur des Messrohrs angepasst. Das magnetisch-induktive Durchflussmessgerät weist eine Feldrückführung 40 gemäß Figs. 1 a bis 1 c) mit einem ersten Gleichteil 41 und einem zweiten Gleichteil 42 auf, wobei die Feldrückrührung das Messrohr 10 umgreift. Biegungsabschnitte 46.1, 46.2 gemäß Figs. 1 a) bis 1 c) sind der Übersichtlichkeit geschuldet nicht detailliert gezeigt. Die Gleichteile weisen jeweils eine Aufnahmeöffnung 45.1 auf, durch welche eine Messelektrodenkontaktierung 21 geführt ist, welche Messelektrodenkontaktierung dazu eingerichtet ist, die Messelektroden mit einer elektronischen Mess-/Betriebsschaltung 70 zu verbinden. Die Spulenhalterung kann ihrerseits eine Öffnung zur Aufnahme einer Messelektrode bzw. einer Messelektrodenkontaktierung aufweisen. Die Gleichteile überlappen sich dabei in den Bereichen der äußeren Polschuhe 33.3 und greifen mittels der in Fig. 1 gezeigten Eingriffsmittel und Eingriffsöffnungen ineinander, wobei die Feldrückführung 40 auf den äußeren Polschuhen 33.1 aufliegt, welche äußeren Polschuhe 33.1 aus einem Spulenhalterungsgrundkörper 34.5 herausragen.

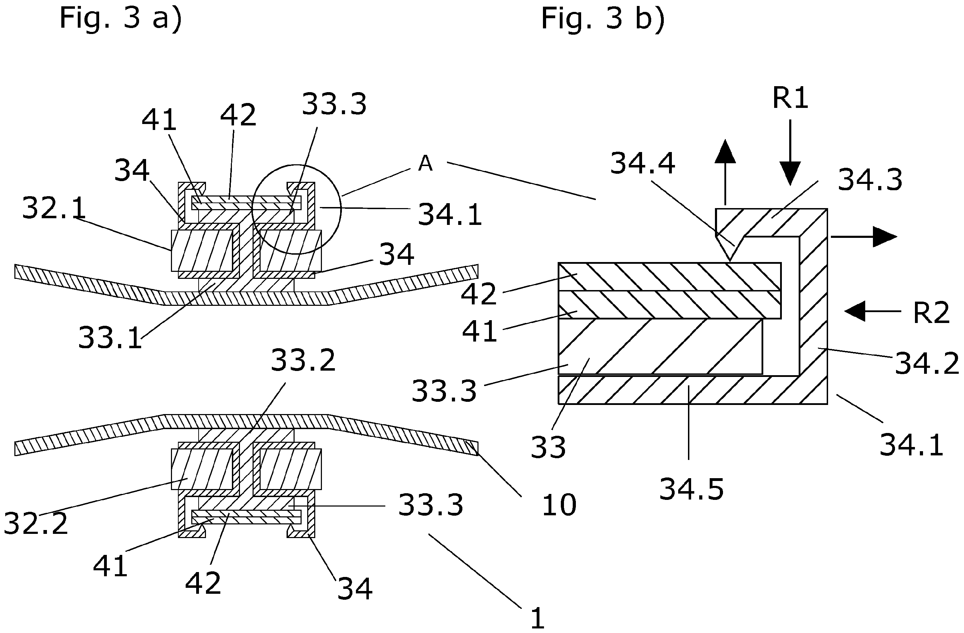

Fig. 3 a) zeigt einen schematischen Längsschnitt durch das erfindungsgemäße, in Fig. 2 dargestellte magnetisch-induktive Durchflussmessgerät 1 mit Messrohr 10, Magnetsystem umfassend zwei Spulensysteme mit jeweils einer Spule 32.1, 32.2 und jeweils einen in die Spulenhalterung 34 eingelassenen Spulenkern. Die Feldrückführung 40 mit dem ersten Gleichteil 41 und dem zweiten Gleichteil 42 liegt dabei auf den äußeren Polschuhen 33.3 der Spulenkerne auf. Um einen Übergang eines durch die Spulen 32.1, 32.2 erzeugten Magnetfelds zwischen Spulenkern und Feldrückführung sowie zwischen den Gleichteilen der Feldrückführung im Überlappbereich 47 zu verbessern und langfristig stabil zu halten, weist die Spulenhalterung 43 Pressvorrichtungen 34.1 auf, welche dazu eingerichtet sind, die Feldrückführung 40 auf definierte Art und Weise elastisch vorgespannt gegen die äußeren Polschuhe 33.1 der Spulenkerne 33 zu pressen. Das Messrohr kann wie hier gezeigt in einem Zentralbereich einen kleinsten Durchmesser aufweisen. Das Messrohr kann aber auch entlang seiner Längsachse einen konstanten Durchmesser aufweisen.

Die in Fig. 3 b) gezeigte Ausschnittsvergrößerung der Pressvorrichtung 34.1 zeigt einen Vorsprung 34.2 der Pressvorrichtung, welcher aus einem Spulenhalterungsgrundkörper 34.5 neben den Gleichteilen 41, 42 der Feldrückführung hervorragt und diese sowie den äußeren Polschuh überragt. Ein Ausleger 34.3 der Pressvorrichtung schließt an den Vorsprung an und überkragt die Gleichteile sowie den äußeren Polschuh 33.3 teilweise, wobei der Ausleger eine Quetschrippe 34.4 aufweist, deren Querschnitt einen dreieckigen Verlauf aufweist. Alternativ kann der Querschnitt der Quetschrippe auch eine Kreissegmentform aufweisen. Vor Montage der Feldrückführung weist die Quetschrippe einen Abstand zum äußeren Polschuh 33.3 auf, welcher kleiner ist als eine Dicke der Feldrückführung parallel zu einer Spulenachse. Bei Montage der Feldrückführung durch Zusammenführen der Gleichteile 41, 42 wird über die Quetschrippe eine Kraft auf die Pressvorrichtung ausgeübt, welche zu einer Verformung der Quetschrippe führt. Die auf die Pressvorrichtung ausgeübte Kraft verursacht des Weiteren eine Auslenkung des Auslegers 34.3 sowie des Vorsprungs 34.2 wie durch die von der Pressvorrichtung wegzeigenden Pfeile angedeutet, was die Ausübung eines Biegemoments auf den Spulenhalterungsgrundkörper 34.5 zur Folge hat. Bei einem im Vergleich zum Ausleger und zum Vorsprung nachgiebiger Quetschrippe lässt sich die Anpresskraft langfristig stabilisieren. Des Weiteren lässt sich dadurch erreichen, dass verschiedene magnetisch-induktive Durchflussmessgeräte einer Serie eine geringe Serienstreuung aufweisen. Eine Pressvorrichtung greift dabei in einen Überlappbereich 47 ein, womit ein Bewegungsspielraum der Feldrückführung 40 durch die Anschläge 47.3 beschränkt ist. Bei passgenauer Ausgestaltung der Pressvorrichtung sowie der Feldrückführung zueinander lässt sich ein fester Sitz der Feldrückführung erzielen.

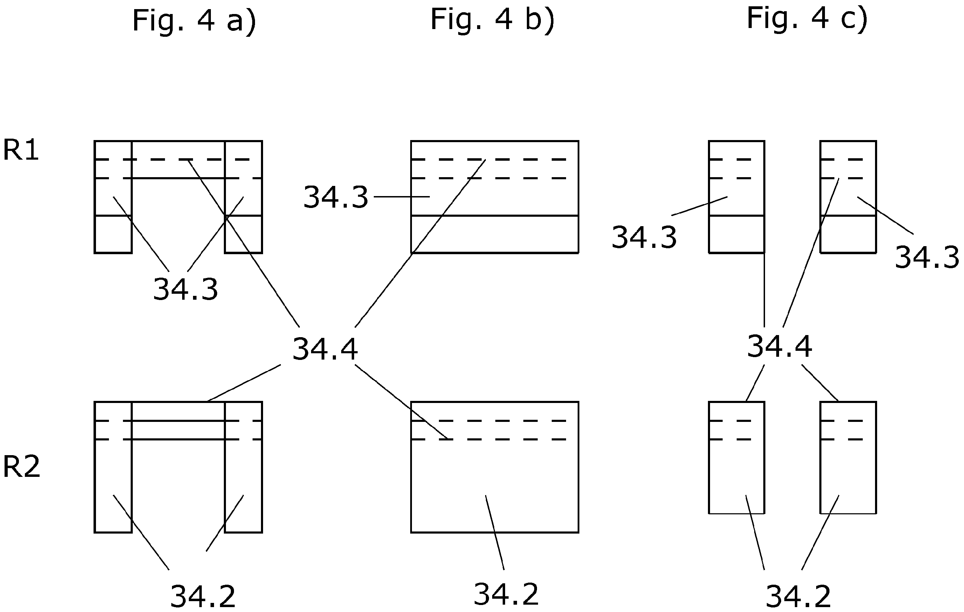

Figs. 4 a) bis c) skizzieren schematisch verschiedene Ausführungsformen von Pressvorrichtungen eines erfindungsgemäßen Durchflussmessgeräts aus zwei verschiedenen, in Fig. 3 b) angedeuteten Richtungen R1 sowie R2.

Fig. 4 a) zeigt eine Pressvorrichtung mit zwei Vorsprüngen 34.2 mit jeweils einem Ausleger 34.3, welche Ausleger eine Quetschrippe halten. Fig. 4 b) zeigt eine Pressvorrichtung mit einem Vorsprung 34.2 mit einem Ausleger 34.3, welche Ausleger eine Quetschrippe hält. Fig. 4 c) eine Pressvorrichtung mit zwei Vorsprüngen mit jeweils einem Ausleger, welche Ausleger jeweils eine Quetschrippe aufweisen. Durch Variation der Anzahl n1 der Vorsprünge, der Anzahl n2 der Ausleger, der Anzahl n3 der Quetschrippen sowie deren Ausdehnungen entlang der Feldrückführung lässt sich ein Flächenträgheitsmoment der Pressvorrichtung und somit die Anpresskraft der Pressvorrichtung einstellen. Die Anzahlen n1, n2 und n3 sind bevorzugt 1 oder 2, können aber auch größere Werte annehmen.

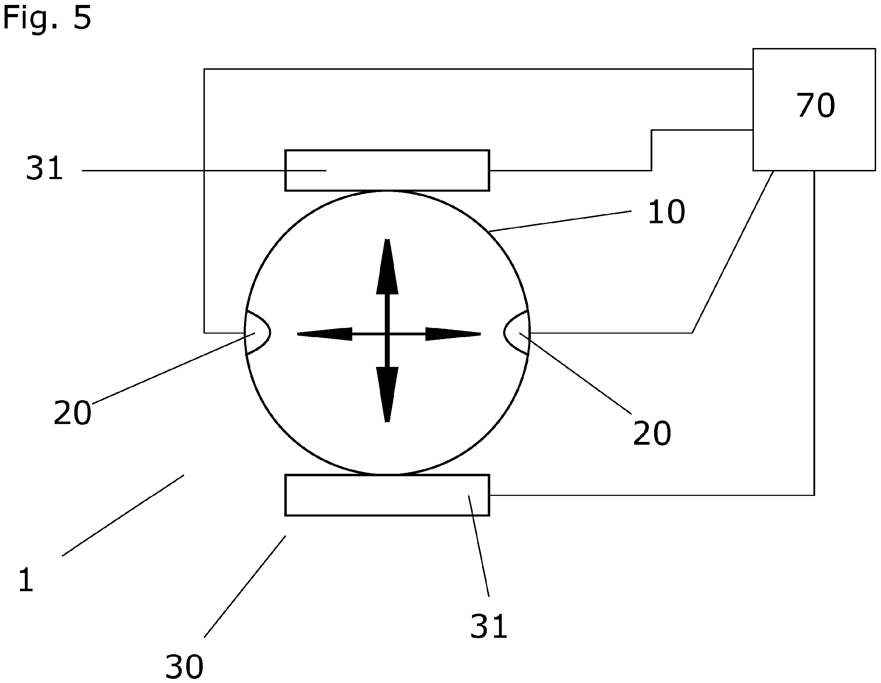

Fig. 5 skizziert die Funktionsweise eines erfindungsgemäßen magnetisch-induktiven Durchflussmessgeräts 1 anhand einer vereinfachten Darstellung, welche das Messrohr 10, im Messrohr angeordnete Messelektroden 20, das Magnetsystem 30 mit zwei Spulensystemen 31 sowie eine elektronische Mess-/Betriebsschaltung zeigt. Das Magnetsystem ist dazu eingerichtet, ein senkrecht zu einer Messrohrachse stehendes Magnetfeld zu erzeugen, siehe vertikaler Doppelpfeil. Das Magnetfeld induziert bei einem durch das Messrohr strömenden Medium eine durchflussabhängige elektrische Spannung, siehe horizontaler Doppelpfeil, welche von den Messelektroden aufgegriffen und zur elektronischen Mess-/Betriebsschaltung 70 geleitet wird. Die elektronische Mess-/Betriebsschaltung ist dazu eingerichtet, auf Basis der elektrischen Spannung eine durchflussabhängige Messgröße bereitzustellen und das Magnetsystem zu betreiben.

### Bezugszeichenliste

- 1: magnetisch-induktives Durchflussmessgerät
- 10: Messrohr
- 10.1: Führungskanal
- 20: Messelektrode
- 21: Messelektrodenkontaktierung
- 30: Magnetsystem
- 31.1: erstes Spulensystem
- 31.2: zweites Spulensystem
- 32.1: erste Spule
- 32.2: zweite Spule
- 33: Spulenkern
- 33.3: Äußerer Polschuh
- 34: Spulenhalterung
- 34.1: Pressvorrichtung
- 34.2: Vorsprung
- 34.3: Ausleger
- 34.4: Quetschrippe
- 34.5: Spulenhalterungsgrundkörper
- 40: Feldrückführung
- 41: erstes Gleichteil
- 42: zweites Gleichteil
- 43: erstes planares Ende
- 44: zweites planares Ende
- 45: Mittenbereich
- 45.1: Aufnahmeöffnung
- 46.1: erster Biegungsabschnitt
- 46.2: zweiter Biegungsabschnitt
- 47: Überlappbereich
- 47.1: Außenbereich
- 47.2: Zentralbereich
- 47.3: Anschlag
- 48.1: Eingriffsöffnung
- 48.2: Eingriffsmittel
- 49: Lasche
- 50.1: erster Bereich
- 50.2: zweiter Bereich
- 70: elektronische Mess-/Betriebsschaltung

## Patentansprüche

1. Magnetisch-induktives Durchflussmessgerät (1) zur Messung einer Strömungsgeschwindigkeit bzw. eines Volumendurchflusses eines durch ein Messrohr fließenden Mediums umfassend:
Ein Messrohr (10) mit einem Führungskanal (10.1) zum Führen eines Mediums, wobei das Messrohr eine Messrohrachse aufweist;
ein Magnetsystem (30) mit einem ersten Spulensystem (31.1) mit einer ersten Spule (32.1) und mit einem ersten Spulenkern (33.1), und mit einem Feldleitkörper (33.2), wobei der erste Spulenkern und der Feldleitkörper auf gegenüberliegenden Messrohrseiten angeordnet sind,
und wobei das Magnetsystem dazu eingerichtet ist, ein senkrecht zur Messrohrachse stehendes Magnetfeld zu erzeugen,
wobei das Magnetsystem mindestens eine Spulenhalterung (34) aufweist, mittels welcher Spulenhalterung mindestens ein Spulensystem gehalten ist;
ein Paar Messelektroden (20) zum Erfassen einer durch das Magnetfeld induzierten durchflussabhängigen elektrischen Spannung im Medium;
eine elektronische Mess-/Betriebsschaltung (70) zum Betreiben des Magnetsystems sowie der Elektroden und zum Bereitstellen einer den Durchfluss repräsentierenden Messgröße;
wobei das magnetisch-induktive Durchflussmessgerät eine Feldrückführung (40) aufweist, welche dazu eingerichtet ist, das Magnetfeld außerhalb des Messrohrs zwischen einer dem Messrohr abgewandten Seite des Spulensystems und einer dem Spulensystem abgewandten Seite des Messrohrs zu leiten;
wobei das magnetisch-induktive Durchflussmessgerät eine Feldrückführung (40) aufweist, welche dazu eingerichtet ist, das Magnetfeld außerhalb des Messrohrs zwischen den Spulenkernen zu leiten;
wobei der Spulenkern und der Feldleitkörper dazu eingerichtet sind, das Magnetfeld zwischen dem Messrohr und der Feldrückführung zu leiten, wobei der Spulenkern und der Feldleitkörper auf einer dem Messrohr abgewandten Seite einen äußeren Polschuh (33.3) aufweist, auf welchem äußeren Polschuh die Feldrückführung aufliegt,
wobei die Feldrückführung das Messrohr umgreift,
wobei die Feldrückführung umfasst:
ein erstes Gleichteil (41) und ein zweites Gleichteil (42) mit jeweils einem ersten planaren Ende (43), einem zweiten planaren Ende (44) und einem Mittenbereich (45);
wobei die Gleichteile jeweils aus einem Metallblech hergestellt sind,
wobei die ersten Enden von den jeweiligen Mittenbereichen durch jeweils einen ersten Biegungsabschnitt (46.1) abgegrenzt sind, und wobei die zweiten Enden von den jeweiligen Mittenbereichen durch jeweils einen zweiten Biegungsabschnitt (46.2) abgegrenzt sind,
wobei das erste Ende und das zweite Ende eines jeweiligen Gleichteils parallel zueinander verlaufen,
wobei das erste Gleichteil und das zweite Gleichteil dazu eingerichtet sind, über ihre Enden zusammengeführt zu werden, wobei die Feldrückführung zwei Überlappbereiche (47) aufweist, in welchem sich Enden der Gleichteile überlappen,
**dadurch gekennzeichnet, dass** die ersten Enden und die zweiten Enden jeweils mindestens eine Eingriffsöffnung (48.1) und mindestens ein Eingriffsmittel (48.2) aufweisen,
wobei das Eingriffsmittel eines jeden Endes dazu eingerichtet ist, bei Zusammenführung der Gleichteile in eine Eingriffsöffnung eines Endes des jeweils anderen Gleichteils einzugreifen.

2. Magnetisch-induktives Durchflussmessgerät nach Anspruch 1,
wobei das magnetisch-induktive Durchflussmessgerät eine zweite Spule (32.2) aufweist, wobei der Feldleitkörper als zweiter Spulenkern 33.2 ausgebildet ist, und wobei die zweite Spule mit dem zweiten Spulenkern (33.2) ein zweites Spulensystem (31.2) ausbildet, wobei das erste Spulensystem und das zweite Spulensystem vorzugsweise gleich ausgebildet sind.

3. Magnetisch-induktives Durchflussmessgerät nach Anspruch 1 oder 2,
wobei das Eingriffsmittel eine Lasche (49) ist, welche in die Eingriffsöffnung einrastet, wobei die Lasche aus dem Gleichteil geformt ist,
wobei der Formprozess einer aus folgender Liste ist: Stanzen, Schneiden, Laserschneiden, Sägen, Ätzen, Wasserstrahlschneiden.

4. Magnetisch-induktives Durchflussmessgerät nach einem der Ansprüche 1 bis 3,
wobei der Mittenbereich eine Aufnahmeöffnung (45.1) aufweist, welche Aufnahmeöffnung dazu eingerichtet ist, eine Messelektrode (20) oder eine Messelektrodenkontaktierung (21) einer Messelektrode eines magnetisch-induktiven Durchflussmessgeräts aufzunehmen.

5. Magnetisch-induktives Durchflussmessgerät nach einem der vorigen Ansprüche,
wobei der Mittenbereich planar ist.

6. Magnetisch-induktives Durchflussmessgerät nach einem der vorigen Ansprüche,
wobei die Feldrückführung eine Querschnittsfläche aufweist, bezüglich welcher Querschnittsfläche die Gleichteile symmetrisch sind, wobei die Gleichteile sowie die Feldrückführung senkrecht zur Querschnittsfläche eine Breite aufweisen,
wobei die Enden einen ersten Bereich (50.1) und einen zweiten Bereich (50.2) aufweisen, wobei der erste Bereich an den ersten Biegungsabschnitt (46.1) bzw. an den zweiten Biegungsabschnitt (46.2) anschließt, und wobei der zweite Bereich an den ersten Bereich anschließt,
wobei der erste Bereich eine erste Breite aufweist, und wobei der zweite Bereich eine zweite Breite aufweist, wobei die erste Breite größer ist als die zweite Breite,
und wobei die Überlappbereiche (47) der Feldrückführung jeweils zwei Außenbereiche (47.1) und jeweils einen Zentralbereich (47.2) aufweisen, wobei die Außenbereiche jeweils einem Mittenbereich zugewandt sind, und wobei der Zentralbereich zwischen den jeweiligen Außenbereichen angeordnet ist,
wobei die Außenbereiche eine dritte Breite und die Zentralbereiche eine vierte Breite aufweisen, wobei die dritte Breite gleich der ersten Breite ist, und wobei die vierte Breite gleich der zweiten Breite ist,
wobei ein Übergang von einem Außenbereich zu einem Zentralbereich ein Anschlag (47.3) ist.

7. Magnetisch-induktives Durchflussmessgerät nach Anspruch 6,
wobei die Spulenhalterung (34) auf mindestens einer dem Messrohr abgewandten Seite mindestens eine Pressvorrichtungen (34.1) aufweist, welche dazu eingerichtet sind, die Feldrückführung (40) gegen den äußeren Polschuh (33.1) eines Spulenkerns (33.1, 33.2) zu pressen.

8. Magnetisch-induktives Durchflussmessgerät nach Anspruch 7,
wobei die Pressvorrichtung (34.1) mindestens einen Vorsprung (34.2) parallel zu einer Spulenkernachse aufweist, welcher Vorsprung aus einem Spulenhalterungsgrundkörper (34.5) neben der Feldrückführung hervorsteht und die Feldrückführung überragt,
und wobei die Pressvorrichtung mindestens einen Ausleger (34.3) aufweist, welcher Ausleger mit mindestens einem Vorsprung verbunden ist und einen Randbereich der Feldrückführung zumindest teilweise überkragt,
wobei ein überkragender Bereich des Auslegers auf einer der Feldrückführung zugewandten Seite mindestens eine Quetschrippe (34.4) aufweist, welche dazu eingerichtet ist, die Feldrückführung gegen den Polschuh zu pressen.

9. Magnetisch-induktives Durchflussmessgerät nach Anspruch 8,
wobei die Quetschrippe (34.4) dazu eingerichtet ist, sich bei Pressung der Feldrückrührung zu verformen.

10. Magnetisch-induktives Durchflussmessgerät nach Anspruch 8 oder 9,
wobei die Quetschrippe (34.4) parallel zur Feldrückrührung (40) verläuft, und wobei die Quetschrippe in ihrem Querschnitt eine Dreiecksform aufweist, wobei eine zur Feldrückführung zeigende Ecke des Querschnitts einen Winkel kleiner als 90° und insbesondere kleiner als 80° bevorzugt kleiner als 70° aufweist.

11. Magnetisch-induktives Durchflussmessgerät nach Anspruch 8 bis 10,
wobei die Quetschrippe (34.4) parallel zur Feldrückrührung (40) verläuft, und wobei die Quetschrippe in ihrem Querschnitt einem Kreisausschnitt entspricht, wobei eine dem Umfang entsprechende Seite eines zum Kreisausschnitt gehörenden Kreises zur Feldrückführung gerichtet ist.

12. Magnetisch-induktives Durchflussmessgerät nach einem der Ansprüche 8 bis 11,
wobei der mindestens eine Vorsprung (34.2) und/oder der Ausleger (34.3) dazu eingerichtet ist, bei Pressung eine durch den mindestens einen Ausleger bzw. den mindestens einen Vorsprung definierte Anpresskraft über den mindestens einen Ausleger aufzunehmen und sich zu verformen.

13. Magnetisch-induktives Durchflussmessgerät nach einem der Ansprüche 7 bis 12,
wobei die Pressvorrichtung (34.1) in einen Zentralbereich (47.2) der Feldrückführung (40) eingreift, wodurch die Feldrückführung mittels der Anschläge (47.3) positioniert ist.

14. Magnetisch-induktives Durchflussmessgerät nach einem der Ansprüche 7 bis 13,
wobei die Spulenhalterung (34) mittels eines Spritzgussverfahrens hergestellt ist.

## Claims

1. Electromagnetic flowmeter (1) designed to measure a flow velocity or a volume flow of a medium flowing through a measuring tube, wherein said flowmeter comprises:
a measuring tube (10) with a guide channel (10.1) designed to conduct a medium, wherein the measuring tube has a measuring tube axis;
a magnet system (30) with a first coil system (31.1) with a first coil (32.1) and a first coil core (33.1), and with a field guiding body (33.2), wherein the first coil core and the field guiding body are arranged on opposite sides of the measuring tube,
and wherein the magnet system is designed to generate a magnetic field perpendicular to the measuring tube axis,
and wherein the magnet system comprises at least one coil holder (34) by means of said coil holder at least a coil system is held in place;
a pair of measuring electrodes (20) to measure a flow-dependent electrical voltage induced in the medium by the magnetic field;
an electronic measuring/operation circuit (70) designed to operate the magnet system and the electrodes, and to provide a measured variable that represents the flow;
wherein the electromagnetic flowmeter comprises a field feedback device (40), which is designed to direct the magnetic field outside the measuring tube between a side of the coil system facing away from the measuring tube and a side of the measuring tube facing away from the coil system;
wherein the electromagnetic flowmeter comprises a field feedback device (40), which is designed to guide the magnetic field outside the measuring tube between the coil cores;
wherein the coil core and the field guiding body are designed to guide the magnetic field between the measuring tube and the field feedback device, wherein the coil core and the field guiding body have an outer pole piece (33.3) on a side opposite the measuring tube, wherein the field feedback device rests on said outer pole piece,
wherein the field feedback device surrounds the measuring tube,
wherein the field feedback device comprises:
a first non-variable part (41) and a second non-variable part (42) each with a first planar end (43), a second planar end (44), and a central area (45);
wherein the non-variable parts are each made from a metal sheet,
wherein the first ends are delimited in each case from the central areas by a first curved section (46.1), and wherein the second ends are delimited in each case from the central areas by a second curved section (46.2),
wherein the first end and the second end of a non-variable part are parallel to one another,
wherein the first non-variable part and the second non-variable part are designed to be joined at their ends, wherein the field feedback device comprises two overlap sections (47) in which ends of the non-variable parts overlap,
**characterized in that** the first ends and the second ends each have at least one engagement opening (48.1) and at least one means of engagement (48.2),
wherein the means of engagement of each end are designed to engage when the non-variable parts are joined in an engagement opening of an end of the other respective non-variable part.

2. Electromagnetic flowmeter as claimed in Claim 1,
wherein the electromagnetic flowmeter comprises a second coil (32.2), wherein the field guiding body is formed as a second coil core (33.2), and where the second coil forms a second coil system (31.2) with the second coil core (33.2), wherein the first coil system and the second coil system are preferably identical in design.

3. Electromagnetic flowmeter as claimed in Claim 1 or 2,
wherein the means of engagement is a latch (49) that engages in the engagement opening, wherein the latch is formed from the non-variable part,
wherein the forming process is one from the following list: punching, cutting, laser-cutting, sawing, etching, water jet cutting.

4. Electromagnetic flowmeter as claimed in one of the Claims 1 to 3,
wherein the central area comprises a reception opening (45.1), wherein the reception opening is designed to receive a measuring electrode (20) or a measuring electrode contact (21) of a measuring electrode of an electromagnetic flowmeter.

5. Electromagnetic flowmeter as claimed in one of the previous claims,
wherein the central area is planar.

6. Electromagnetic flowmeter as claimed in one of the previous claims,
wherein the field feedback device has a cross-sectional area in relation to which the non-variable parts are symmetrical, wherein the non-variable parts and the field feedback device have a width perpendicular to the cross-sectional area,
wherein the ends have a first area (50.1) and a second area (50.2), wherein the first area follows on from the first curved section (46.1) and the second curved section (46.2), and wherein the second area follows on from the first area,
wherein the first area has a first width, and the second area has a second width, wherein the first width is greater than the second width,
and wherein the overlap sections (47) of the field feedback device each have two outer areas (47.1) and a central area (47.2), wherein the outer areas each face towards a central area, and where the central area is arranged between the respective outer areas, wherein the outer areas have a third width and the central areas have a fourth width, wherein the third width is equal to the first width, and the fourth width is equal to the second width,
wherein a transition from an outer area to a central area is a limit stop (47.3).

7. Electromagnetic flowmeter as claimed in Claim 6,
wherein, on at least one side opposite the measuring tube, the coil holder (34) has a press device (34.1), which is designed to press the field feedback device (40) against the outer pole piece (33.1) of a coil core (33.1, 33.2).

8. Electromagnetic flowmeter as claimed in Claim 7,
wherein the press device (34.1) comprises at least a projection (34.2) parallel to an axis of the coil core, wherein said projection projects out of a coil holder base body (34.5) near the field feedback device and projects over the field feedback device,
and wherein the press device comprises at least a cantilever arm (34.3), wherein said cantilever arm is connected to at least one projection and at least partially projects over a marginal zone of the field feedback device,
wherein an area of the cantilever arm that projects out has at least one squeezer rib (34.4) on a side facing towards the field feedback device, wherein said squeezer rib is designed to press the field feedback device against the pole piece.

9. Electromagnetic flowmeter as claimed in Claim 8,
wherein the squeezer rib (34.4) is designed to deform when pressing the field feedback device.

10. Electromagnetic flowmeter as claimed in Claim 8 or 9,
wherein the squeezer rib (34.4) extends parallel to the field feedback device (40), and wherein the cross-section of the squeezer is triangular, wherein a corner of the cross-section pointing towards the field feedback device has an angle of less than 90° and particularly less than 80°, and preferably less than 70°.

11. Electromagnetic flowmeter as claimed in Claims 8 to 10,
wherein the squeezer rib (34.4) extends parallel to the field feedback device (40), and wherein the cross-section of the squeezer rib corresponds to a circular section, wherein a side of a circle belonging to the circular section, said side corresponding to the circumference of the circle, faces towards the field feedback device.

12. Electromagnetic flowmeter as claimed in one of the Claims 8 to 11,
wherein, during the pressing action, the at least one projection (34.2) and/or cantilever arm (34.3) is designed to adopt the contact pressure defined by the at least one cantilever arm or the at least one projection via the at least on cantilever arm and deform.

13. Electromagnetic flowmeter as claimed in one of the Claims 7 to 12,
wherein the press device (34.1) engages in a central area (47.2) of the field feedback device (40), as a result of which the field feedback device is positioned by means of the limit stops (47.3).

14. Electromagnetic flowmeter as claimed in one of the Claims 7 to 13,
wherein the coil holder (34) is produced using an injection molding process.

## Revendications

1. Débitmètre électromagnétique (1) destiné à la mesure d'une vitesse d'écoulement ou d'un débit volumique d'un produit s'écoulant à travers un tube de mesure, lequel débitmètre comprend :
un tube de mesure (10) avec un canal de guidage (10.1) destiné à guider un produit, le tube de mesure présentant un axe de tube de mesure ;
un système magnétique (30) avec un premier système de bobine (31.1) avec une première bobine (32.1) et un premier noyau de bobine (33.1), et avec un corps de guidage de champ (33.2), le premier noyau de bobine et le corps de guidage de champ étant disposés sur des côtés opposés du tube de mesure,
et le système magnétique étant agencé pour générer un champ magnétique perpendiculaire à l'axe de tube de mesure,
le système magnétique comprenant au moins un porte-bobine (34), au moyen duquel porte-bobine au moins un système de bobine est maintenu ;
une paire d'électrodes de mesure (20) destinée à mesurer une tension électrique induite par le champ magnétique, qui est fonction du débit de produit ;
un circuit électronique de mesure et d'exploitation (70) destiné à l'exploitation du système magnétique et des électrodes, et pour la mise à disposition d'une grandeur de mesure représentant le débit ;
le débitmètre électromagnétique comprenant un retour de champ (40), lequel est agencé pour diriger le champ magnétique à l'extérieur du tube de mesure entre un côté du système de bobine opposé au tube de mesure et un côté du tube de mesure opposé au système de bobine ;
le débitmètre électromagnétique comprenant un retour de champ (40), lequel est agencé pour diriger le champ magnétique à l'extérieur du tube de mesure entre les noyaux de bobine ;
le noyau de bobine et le corps de guidage de champ étant conçus pour guider le champ magnétique entre le tube de mesure et le retour de champ, le noyau de bobine et le corps de guidage de champ présentant une pièce polaire extérieure (33.3) sur un côté opposé au tube de mesure, pièce polaire extérieure sur lequel repose le retour de champ,
le retour de champ entourant le tube de mesure,
le retour de champ comprenant :
un premier composant invariant (41) et un deuxième composant invariant (42) avec chacun une première extrémité plane (43), une seconde extrémité plane (44), et une zone centrale (45) ;
les composants invariants étant chacun fabriqués à partir d'une feuille de métal,
les premières extrémités étant délimitées par rapport aux zones centrales respectives par une première partie d'inflexion (46.1) respective, et les deuxièmes extrémités étant délimitées par rapport aux zones centrales respectives par une seconde partie d'inflexion (46.2),
la première extrémité et la seconde extrémité d'un composant invariant respectif étant parallèles l'un à l'autre,
le premier composant invariant et le deuxième composant invariant étant conçus pour être rapprochés par leurs extrémités, le retour de champ comprenant deux zones de chevauchement (47), dans lesquelles les extrémités des composants invariants se chevauchent,
**caractérisé en ce que** les premières extrémités et les secondes extrémités présentent chacune au moins une ouverture d'engagement (48.1) et au moins un moyen d'engagement (48.2),
le moyen d'engagement de chaque extrémité étant conçu pour s'engager dans une ouverture d'engagement d'une extrémité de l'autre composant invariant respectif lorsque les parties égales sont réunies.

2. Débitmètre électromagnétique selon la revendication 1,
pour lequel le débitmètre électromagnétique comprend une seconde bobine (32.2), le corps de guidage de champ étant formé en tant que second noyau de bobine (33.2), et la seconde bobine formant un second système de bobine (31.2) avec le second noyau de bobine (33.2), le premier système de bobine et le second système de bobine étant de préférence formés de manière identique.

3. Débitmètre électromagnétique selon la revendication 1 ou 2,
pour lequel le moyen d'engagement est une languette (49) qui s'engage dans l'ouverture d'engagement, la languette étant formée à partir du composant invariant,
le procédé de formage étant l'un de ceux de la liste suivante : estampage, découpage, découpage au laser, sciage, gravure, découpage au jet d'eau.

4. Débitmètre électromagnétique selon l'une des revendications 1 à 3,
pour lequel la zone centrale comprend une ouverture de réception (45.1), laquelle ouverture de réception est conçue pour recevoir une électrode de mesure (20) ou un contact (21) d'une électrode de mesure d'un débitmètre électromagnétique.

5. Débitmètre électromagnétique selon l'une des revendications précédentes,
pour lequel la zone centrale est plane.

6. Débitmètre électromagnétique selon l'une des revendications précédentes,
pour lequel le retour de champ présente une superficie de section par rapport à laquelle les composants invariants sont symétriques, les composants invariants ainsi que le retour de champ présentant une largeur perpendiculaire à la superficie de section, les extrémités présentant une première zone (50.1) et une deuxième zone (50.2), la première zone étant respectivement contiguë à la première partie d'inflexion (46.1) et à la deuxième partie d'inflexion (46.2), et la deuxième région étant contiguë à la première zone,
la première zone présentant une première largeur, et la deuxième zone présentant une deuxième largeur, la première largeur étant supérieure à la deuxième largeur,
et les zones de chevauchement (47) du retour de champ présentant chacune deux zones extérieures (47.1) et présentant chacune une zone centrale (47.2), les zones extérieures faisant chacune face à une zone centrale, et la zone centrale étant disposée entre les zones extérieures respectives,
les zones extérieures présentant une troisième largeur et les zones centrales une quatrième largeur, la troisième largeur étant égale à la première largeur, et la quatrième largeur étant égale à la deuxième largeur,
une transition d'une zone extérieure à une zone centrale étant matérialisée par une butée (47.3).

7. Débitmètre électromagnétique selon la revendication 6,
pour lequel le porte-bobine (34) présente, sur au moins un côté opposé au tube de mesure, au moins un dispositif presseur (34.1), lequel est agencé pour presser le retour de champ (40) contre la pièce polaire extérieure (33.1) d'un noyau de bobine (33.1, 33.2).

8. Débitmètre électromagnétique selon la revendication 7,
pour lequel le dispositif presseur (34.1) comprend au moins une saillie (34.2) parallèle à un axe de noyau de bobine, laquelle saillie déborde d'un corps de base de porte-bobine (34.5) adjacent au retour de champ et surplombe le retour de champ,
et pour lequel le dispositif presseur comprend au moins un porte-à-faux (34.3), lequel porte-à-faux est relié à au moins une saillie et surplombe au moins partiellement une zone marginale du retour de champ,
une zone en surplomb du porte-à-faux présentant, sur un côté faisant face au retour de terrain, au moins une nervure d'écrasement (34.4) qui est agencée pour presser le retour de champ contre la pièce polaire.

9. Débitmètre électromagnétique selon la revendication 8,
pour lequel la nervure d'écrasement (34.4) est conçue pour se déformer lorsque le retour de champ est pressé.

10. Débitmètre électromagnétique selon la revendication 8 ou 9,
pour lequel la nervure d'écrasement (34.4) s'étend parallèlement au retour de champ (40), et pour lequel la nervure d'écrasement présente une forme triangulaire dans sa section transversale, un coin de la section transversale pointant vers le retour de champ présentant un angle inférieur à 90° et notamment inférieur à 80°, de préférence inférieur à 70°.

11. Débitmètre électromagnétique selon l'une des revendications 8 à 10,
pour lequel la nervure d'écrasement (34.4) s'étend parallèlement au retour de champ (40), et pour lequel la nervure d'écrasement correspond dans sa section transversale à une section circulaire, un côté correspondant à la circonférence d'un cercle appartenant à la section circulaire étant dirigé vers le retour de champ.

12. Débitmètre électromagnétique selon l'une des revendications 8 à 11,
pour lequel l'au moins une saillie (34.2) et/ou le porte-à-faux (34.3) est agencé pour absorber et déformer, lorsqu'il est pressé, une force de contact définie par l'au moins un porte-à-faux ou l'au moins une saillie via l'au moins un porte-à-faux.

13. Débitmètre électromagnétique selon l'une des revendications 7 à 12,
pour lequel le dispositif presseur (34.1) s'engage dans une zone centrale (47.2) du retour de champ (40), le retour de champ étant positionné au moyen des butées (47.3).

14. Débitmètre électromagnétique selon l'une des revendications 7 à 13,
pour lequel le porte-bobine (34) est fabriqué au moyen d'un procédé de moulage par injection.
